# EUROPEAN PATENT APPLICATION

(11) **EP 2 221 765 A1**
(43) Date of publication of application: **25.08.2010**
(21) Application number: 07848133.0
(22) Date of filing: 19.11.2007
(51) Int. Cl.: G06T 5/50, B64D 39/00

(54) **METHOD AND DEVICE FOR OBTAINING DIGITAL IMAGES DURING RETRACTABLE TUBE OPERATIONS FOR REFUELLING IN THE AIR**

(71) Applicant: EADS Construcciones Aeronauticas, S.A., 28314 Madrid (ES)
(72) Inventor: ADARVE LOZANO, Alberto, E-28906 Getafe, Madrid (ES)
(74) Representative: Elzaburu Marquez, Alberto
(86) International application number: PCT/ES2007/070191
(87) International publication number: WO 2009/065976

(57) **Abstract**

The invention relates to a method for obtaining digital images in aerial refueling boom operations between a tanker aircraft and a receiver aircraft comprising the following steps: capturing black and white digital images of the receiver aircraft illuminated with IR light and, at the same time, colour digital images of spots of laser light projected from the tanker aircraft into the receiver aircraft; mixing said black and white and colour digital images for obtaining single images with black and white and colour information; and sending the mixed images to a control station in the tanker aircraft. The invention also relates to a device for obtaining digital images in aerial refueling boom operations between a tanker aircraft and a receiver aircraft for installation in the tanker aircraft.

## Description

### TECHNICAL FIELD

The present invention relates generally to aircraft refueling booms and more specifically to a method and a device for obtaining digital images in aircraft refueling boom operations.

### BACKGROUND

For in flight refueling operations, one usual method is based on the use of a boom device for interconnecting a tanker aircraft with a receiver aircraft in flight, which is basically a telescoping tube which is attached to the underside of the tanker aircraft by means of an articulation unit. The boom moves around this fixed point during the refueling operation using a a pair of aerodynamic lift surfaces known as ruddevators.

The refueling operation needs accurate and consistent receiver aircraft pre-contact and contact position. In this respect the use of laser means to project laser light on the receiver aircraft and the use of digital cameras in vision systems installed in the tanker aircraft are known in the art.

However known vision systems are not satisfactory when they need to process images of the receiver aircraft with Infrared (IR) light because digital cameras with a colour charge-coupled device (CCD) are usually provided with filters for eliminating radiation in the low IR spectrum (frequencies above 700 nm) so that they are not suitable for capturing images of the receiver aircraft illuminated with IR light.

The present invention is intended to solve this problem.

### SUMMARY OF THE INVENTION

In one aspect, the present invention provides a method for obtaining digital images in aerial refueling boom operations between a tanker aircraft and a receiver aircraft comprising the following steps:
- Capturing black and white digital images of the receiver aircraft illuminated with IR light and, at the same time, colour digital images of spots of laser light projected from the tanker aircraft into the receiver aircraft.
- Mixing said black and white and colour digital images for obtaining single images with black and white and colour information.
- Sending the mixed images to a control station in the tanker aircraft.

In another aspect, the present invention provides a device for obtaining digital images in aerial refueling boom operations between a tanker aircraft and a receiver aircraft for installation in the tanker aircraft comprising:
- A black and white CCD sensor.
- A colour CCD sensor.
- Optical means for receiving incident radiation from the receiver aircraft and addressing the radiation in the range of X1 to X2 nm (X1 to X2 is the interval within the limits of the visible light) to the black and white CCD sensor and the radiation in the range of Y1 to Y2 nm (Y1 to Y2 is the interval at the IR interval over capability of the CCD sensor) to the colour CCD sensor.
- Electronic means for mixing the images captured by the CCD's sensors and sending them to a control station in the tanker aircraft.

### BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein.
Figure 1a and Figure 1b illustrates, respectively black and white and colour digital images captured by the device according to the present invention and Figure 1c illustrates a composed image of them.
Figure 2 shows schematically a device for obtaining digital images in aerial refueling boom operations according to the present invention.

### DETAILED DESCRIPTION OF THE INVENTION

An aircraft refueling boom is a telescoping beam fuel-tight unit with its forward end attached to the underside of a tanker aircraft by means of a mechanical articulation. Integrally attached to the boom are ruddevators which are used to aerodynamically control the position of the boom in elevation and azimuth. The outer end portion of the boom is a telescoping section for inward and outward movement. Located on the distal end of the telescoping tube is a nozzle. The receiver aircraft is equipped with an aerial refueling receptacle which engages with the nozzle for the refueling operation.

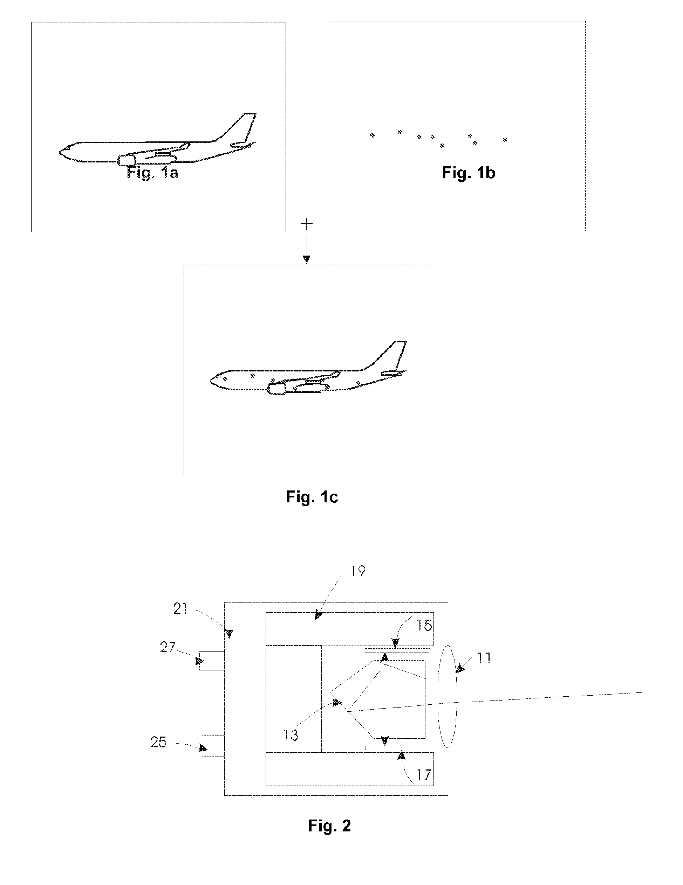

In a refueling operation performed at night according to the method of the present invention, back and white digital images of the receiver aircraft, such as the image of Fig. 1a, and, at the same time digital colour images corresponding to several spots of light of different colour projected on the receiver aircraft surface by laser emitting means placed in the tanker aircraft, such as the image of Fig. 1b, are captured.

Then, both images are mixed to obtain a composed image, such as the image of Fig. 1c, showing clearly the position of said laser spots of light on the aircraft surface, which is sent to a control station to be processed by the boom positioning system following known methods for guiding the boom to engage its nozzle on the receiver aircraft refueling receptacle.

In a preferred embodiment, the device according to this invention includes the following elements: one set of lenses 11, a prism splitter 13, a black and white CCD sensor 15, a colour CCD sensor 17, electronic means 19 for mixing the images captured by both CCD sensors, a box 21, a connector 27 for sending the mixed image to the control station and a connector 25 for power input.

The incident radiation pass through lenses 11 and arrive to a prism splitter 13. Incident radiation in the range of X1 to X2 nm (X1 to X2 is the interval within the limits of the visible light) is sent to the black and white CCD sensor 15 and radiation in the range of Y1 to Y2 nm (Y1 to Y2 is the interval at the IR interval over capability of the CCD sensor) is sent to the colour CCD sensor 17. Said components shall be arranged in a manner that can guarantee pixel coincidence.

In another preferred embodiment, the device includes two sets of lenses, each of them addressing the incoming radiation to one of said CCDs.

For a better understanding of this invention it shall be noted that:
- a black and white CCD sensor refers to a sensor (CCD/MOS/...) with enough sensitivity at the NIR range of frequencies;
- a colour CCD sensor refers to a sensor (CCD/MOS/...) with a different response from the above. In this preferred implementation a colour sensor is used with an IR filter; and
- a prism splitter means a lens or set of lenses (including filter)capable of dividing input photons to send appropriated image to two or more sensors.

Although the present invention has been fully described in connection with preferred embodiments, it is evident that modifications may be introduced within the scope thereof, not considering this as limited by these embodiments, but by the contents of the following claims.

## Claims

1. A method for obtaining digital images in aerial refueling boom operations between a tanker aircraft and a receiver aircraft comprising the following steps:
a) capturing black and white digital images of the receiver aircraft illuminated with IR light and, at the same time, colour digital images of spots of laser light projected from the tanker aircraft into the receiver aircraft;
b) mixing said black and white and colour digital images for obtaining single images with black and white and colour information; and
c) sending the mixed images to a control station in the tanker aircraft.

2. A device for obtaining digital images in aerial refueling boom operations between a tanker aircraft and a receiver aircraft for installation in the tanker aircraft comprising:
a) a black and white CCD sensor (15);
b) a colour CCD sensor (17);
c) optical means (13) for receiving incident radiation from the receiver aircraft and addressing the radiation in the range of X1 to X2 nm (X1 to X2 is the interval within the limits of the visible light) to the black and white CCD sensor (15) and the radiation in the range of Y1 to Y2 nm (Y1 to Y2 is the interval at the IR interval over capability of the CCD sensor) to the colour CCD sensor (17); and
d) electronic means (19) for mixing the images captured by the CCD's sensors (15, 17) and sending them to a control station in the tanker aircraft.

3. A device for obtaining digital images in aerial refueling boom operations between a tanker aircraft and a receiver aircraft for installation in the tanker aircraft according to claim 2 **characterized in that** it also comprises one set of lenses (11) through which the incident radiation passes and arrive to the optical means (13).

4. A device for obtaining digital images in aerial refueling boom operations between a tanker aircraft and a receiver aircraft for installation in the tanker aircraft according to claim 2 **characterized in that** it also comprises two sets of lenses (11), each of them addressing the incoming radiation to one of said CCD's (15, 17) through which the incident radiation passes and arrive to the optical means (13).

5. A device for obtaining digital images in aerial refueling boom operations between a tanker aircraft and a receiver aircraft for installation in the tanker aircraft according to any of claims 2-4 **characterized in that** the optical means for receiving incident radiation from the receiver aircraft is a prism splitter (13) that guarantees pixel coincidence between images from the black and white CCD sensor (15) and the colour CCD sensor (17).

6. A device for obtaining digital images in aerial refueling boom operations between a tanker aircraft and a receiver aircraft for installation in the tanker aircraft according to any of claims 2-5 **characterized in that** it also comprises a connector (23) for sending the mixed image to the control station and a connector (25) for power input.
